# EUROPEAN PATENT APPLICATION

(11) **EP 4 625 648 A1**
(43) Date of publication of application: **01.10.2025**
(21) Application number: 24218539.5
(22) Date of filing: 10.12.2024
(51) Int. Cl.: H01M 50/209, H01M 50/271

(54) **BATTERY PACK**

(30) Priority: 27.03.2024 CN 202420619072 U; 11.09.2024 WO PCT/CN2024/118222
(71) Applicant: Eve Energy Co., Ltd., Huizhou, Guangdong 516006 (CN)
(72) Inventor: LIANG, Xianyu, Huizhou, Guangdong, 516006 (CN); WEI, Xueqing, Huizhou, Guangdong, 516006 (CN); LIU, Pingping, Huizhou, Guangdong, 516006 (CN)
(74) Representative: Berggren Oy

(57) **Abstract**

A battery pack (100) includes a housing (10), a battery module (20), a battery management system (BMS) module (30), and an isolation plate (40) disposed between the battery module (20) and the BMS module (30). An accommodating space (101) is formed in the housing (10). The battery module (20) is disposed within the accommodating space (101). The isolation plate (40) is hermetically connected to the housing (10) to isolate the battery module (20) from the BMS module (30).

## Description

### TECHNICAL FIELD

The present application relates to battery technologies, and more particularly to a battery pack.

### BACKGROUND

A battery management system (BMS) plays a crucial role in maintaining the health and safety of a battery. When the BMS fails or there is a problem with the battery itself, the so-called thermal runaway phenomenon may occur, resulting in damage to the BMS.

Generally, due to cost considerations and space limitations, a battery pack may be designed as a simple and highly integrated structure with insufficient protection measures against the thermal runaway.

### SUMMARY

According to one or more embodiments of the present application, a battery pack includes: a housing in which an accommodating space is formed; a battery module disposed within the accommodating space; a battery management system (BMS) module spaced apart from the battery module; and an isolation plate disposed between the battery module and the BMS module and hermetically connected to the housing to isolate the battery module from the BMS module.

### BRIEF DESCRIPTION OF THE DRAWINGS

FIG. 1 is a perspective view of a battery pack according to one or more embodiments of the present application.
FIG. 2 is a first exploded view of a battery pack according to one or more embodiments of the present application.
FIG. 3 is a second exploded view of a battery pack according to one or more embodiments of the present application.
FIG. 4 is a third exploded view of a battery pack according to one or more embodiments of the present application.
FIG. 5 is a top view of a battery pack according to one or more embodiments of the present application.
FIG. 6 is a cross-sectional view of a battery pack taken along line A-A in FIG. 5 according to one or more embodiments of the present application.
FIG. 7 is a top view of a battery pack, with a BMS module removed, according to one or more embodiments of the present application.

### DETAILED DESCRIPTION

Some embodiments of the present application will be described in detail below with reference to the accompanying drawings. The embodiments are described for illustrative purposes only and are not intended to limit the present application.

In the present application, unless explicitly stated otherwise, terms such as "connect" "couple" and "attach" should be broadly interpreted. For example, these terms may refer to a fixed connection, a detachable connection, or an integral formation. They may indicate a mechanical connection or an electrical connection. The connection may be direct or indirect through an intermediate medium. These terms may also describe internal communication between two elements or an interaction between two elements. Those skilled in the art will understand the specific meanings of these terms in the context of the present application based on the particular circumstances.

In the present application, unless explicitly stated otherwise, when a first feature is described as being "on" or "under" a second feature, this description may include direct contact between the first and second features, or it may indicate that the first and second features are not in direct contact but are connected through intermediate features. Furthermore, when the first feature is described as being "above," "over," or "on top of" the second feature, this includes situations where the first feature is directly above or obliquely above the second feature, with the first feature at a higher elevation than the second feature. Conversely, when the first feature is described as being "below," "under," or "underneath" the second feature, this includes situations where the first feature is directly below or obliquely below the second feature, with the first feature at a lower elevation than the second feature.

In the description of the embodiments, terms such as "upper," "lower," "left," "right," "front," and "rear" are used to describe orientation or positional relationships based on the illustrations in the drawings. These terms are used for descriptive purposes and to simplify the explanation. They do not indicate or imply that the described devices or elements must have a specific orientation or must be constructed and operated in a specific manner. Therefore, these terms should not be construed as limitations on the scope of the present application. Additionally, the terms "first" and "second" are used solely for differentiation and do not imply any particular order or importance.

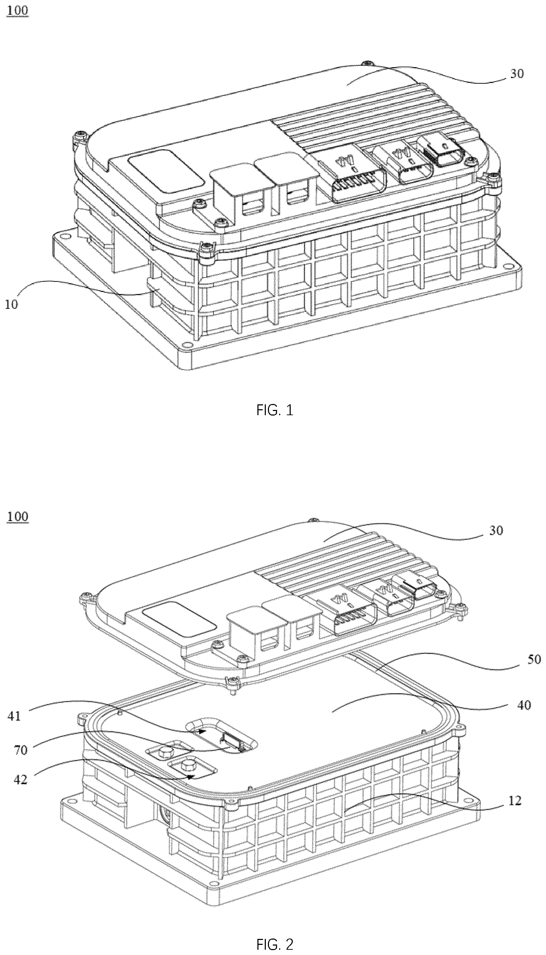

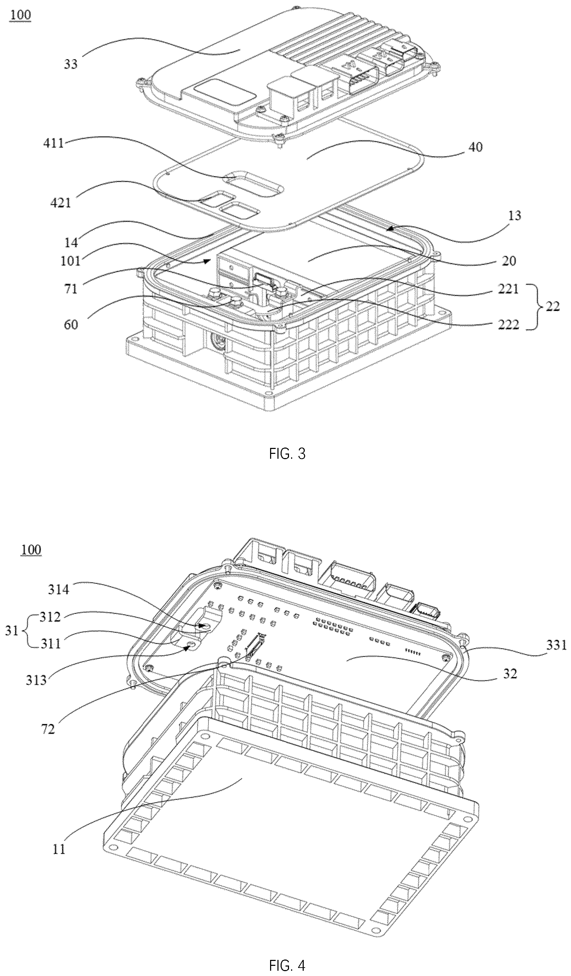

FIG. 1 illustrates a perspective view of a battery pack 100 according to one or more embodiments of the present application. FIGS. 2 and 3 illustrate first and second exploded views of the battery pack 100, respectively. As shown in FIGS. 1-3, the battery pack 100 includes a housing 10, a battery module 20, a BMS module 30, and an isolation plate 40.

An accommodating space 101 is formed inside the housing 10, and the battery module 20 is disposed in the accommodating space 101. The battery module 20 includes a plurality of cells. The BMS module 30 is spaced apart from the battery module 20. The BMS module 30 is configured for intelligent management and maintenance of the battery, monitoring battery status and preventing the battery from overcharge and over-discharge to extend battery life. The isolation plate 40 is positioned between the battery module 20 and the BMS module 30 and hermetically connected to the housing 10 so as to isolate the battery module 20 from the BMS module 30. The isolation plate 40 may be made of heat-resistant insulating plastic.

On the one hand, the isolation plate 40 can block high-temperature gas and high-temperature ejecta, generated by thermal runaway, from being sprayed toward the BMS module 30, thereby isolating smoke from the BMS module 30. Due to the hermetical connection of the isolation plate 40 to the housing 10, when the thermal runaway occurs in the battery module 20, the high-temperature gas and the high-temperature ejecta generated by the thermal runaway may be prevented from reaching the BMS module 30 along the joint between the isolation plate 40 and the housing 10. Thus, the isolation plate 40 can block the impact from the thermal runaway and protect the BMS module 30 from damage, thereby enabling the BMS module 30 to issue a thermal runaway warning signal. On the other hand, the isolation plate 40 firmly connected to the housing 10 can isolate the battery module 20 from the BMS module 30, preventing heat and thermal radiation generated by the operation of the BMS module 30 from heating the battery below, so as to achieve the effect of insulation and heat isolation. Furthermore, the isolation plate 40 can serve to fix the BMS module 30, preventing the BMS module 30 from detaching, thereby enhancing battery safety.

In some embodiments, the housing 10 includes a bottom wall 11 and a housing wall 12. The housing wall 12 surrounds the bottom wall 11 to form the accommodating space 101. The housing wall 12 is provided with a housing opening 13 facing the BMS module 30 at an end away from the bottom wall 11. The isolation plate 40 is positioned at the housing opening 13, with its periphery hermetically connected to the housing wall 12. The isolation plate 40 is positioned at the housing opening 13 on the side away from the bottom wall 11, which can increase the space for the battery module 20 and avoid the BMS module 30 and the battery module 20 being too close. Specifically, the BMS module 30 is mounted at the top of the housing 10, separate from the battery module 20. The housing wall 12 includes an end face facing the BMS module 30 and an inner surface facing the accommodating space 101, with the end face forming the housing opening 13. In some embodiments, the bottom periphery of the isolation plate 40 is hermetically connected to the end face, placing the isolation plate 40 entirely outside the housing 10. In other embodiments, the side of the isolation plate 40 is hermetically connected to the inner surface at an end away from the bottom wall 11, positioning the isolation plate 40 at least partially within the accommodating space 101. In these cases, the top surface of the isolation plate 40 may be higher than or flush with the end face, but not lower than it.

In some embodiments, an explosion-proof valve is provided on the housing wall 12. When thermal runaway occurs in the battery module 20, electrolyte is ejected outward from the explosion-proof valve. The BMS module 30 is disposed on top of the battery module 20, not in the ejection direction of the electrolyte. This arrangement avoids the BMS module 30 being impacted first. Under the premise that the BMS module 30 is not damaged, thermal runaway alarm can be carried out to timely discover the thermal runaway accident of the battery module 20.

In some embodiments, the battery pack 100 further includes a sealing adhesive layer (not shown in the figures). The sealing adhesive layer is disposed at the joint between the isolation plate 40 and the housing wall 12. Specifically, the sealing adhesive can be applied either to the periphery of the isolation plate 40 or to the inner periphery of the housing wall 12. The sealing adhesive can be liquid sealing adhesive, hot melt sealing adhesive, paste sealing adhesive, etc. The sealing adhesive has high stability and good adhesion effect, which can avoid the isolation plate 40 from moving or falling off.

In some embodiments, the battery pack 100 further includes a sealing ring 50. The sealing ring 50 can be made of flexible materials such as rubber or silicone. The sealing ring 50 is sleeved on the isolation plate 40 and abuts between the housing wall 12 and the isolation plate 40. Specifically, the sealing ring 50 is sleeved on the edge of the isolation plate 40, with its outer side attached to the housing wall 12. For example, an annular groove can be provided inside the sealing ring 50. The periphery of the isolation plate 40 is installed in the annular groove and closely fits with the sealing ring 50.

In some embodiments, the battery pack 100 further includes a sealing tape. The sealing tape can be adhered to the periphery of the isolation plate 40, then the isolation plate 40 is adhered to the housing wall 12; the sealing tape can also be adhered to the inner periphery of the housing wall 12, then the isolation plate 40 is aligned and adhered to the sealing tape to fix the isolation plate 40.

It can be understood that those skilled in the art can take other ways to make the isolation plate 40 hermetically connected to the housing wall 12.

In some embodiments, rather than positioned at the housing opening 13, the isolation plate 40 can be disposed in the accommodating space 101 and divides the accommodating space 101 into a first chamber and a second chamber. The BMS module 30 is disposed in the first chamber, the battery module 20 is disposed in the second chamber, the periphery of the isolation plate 40 and the housing 10 are hermetically connected. Since the volume of the battery module 20 is smaller than the volume of the BMS module 30, the size of the first chamber can be smaller than the size of the second chamber.

Specifically, the housing 10 is a rectangular structure including a bottom wall 11 surrounded by a housing wall 12. The housing wall 12 includes two opposite side walls and two opposite end walls, with the side walls being longer than the end walls. The housing 10 further includes a top wall (not shown in the figures) that covers the housing wall 12 to seal the accommodating space 101. The isolation plate 40 includes two opposite long edges and two opposite short edges.

In some embodiments, the isolation plate 40 is disposed parallel to the end walls. That is, the two short edges of the isolation plate 40 are hermetically connected to the two side walls, respectively, and one long edge is connected to the bottom wall 11 while the other long edge is connected to the top wall. Thus, the periphery of the isolation plate 40 is hermetically connected to the housing 10, dividing the space horizontally into the first and second chambers, thereby separating the battery module 20 from the BMS module 30. In other embodiments, the isolation plate 40 is disposed parallel to the bottom wall 11. That is, the two long edges are hermetically connected to the two side walls, respectively, and the two short edges are hermetically connected to the two end walls, respectively. Thus, the space is divided vertically into the first and second chambers, thereby separating the battery module 20 from the BMS module 30.

In some embodiments, the isolation plate 40 is provided with a first opening 41. The battery pack 100 further includes a connecting wire 70 that passes through the first opening 41. One end of the connecting wire 70 connects to the battery module 20, while the other end connects to the BMS module 30. Specifically, the accommodating space 101 is provided with a bracket. The battery module 20 includes a busbar 22 which is installed on this bracket. The connecting wire 70 is electrically connected to the busbar 22. The connecting wire 70 includes a plurality of branch wire harnesses. The end of the branch wire harnesses close to the BMS is bundled together through a connecting terminal 71. The BMS module 30 is provided with a connector 72, and the connecting terminal 71 is correspondingly connected to the connector 72. This connection transmits the collected signals to the BMS module 30 for controlling and managing the operation of the battery pack 100. Setting the first opening 41 on the isolation plate 40 can facilitate the connection of the connecting wire 70 to the BMS module 30, reducing the wire length required for connection, which is beneficial for the wiring of the battery module 20.

In some embodiments, the battery module 20 further includes a thermal conduction sheet provided with a temperature sensing component. This thermal conduction sheet is electrically connected to the battery pack 100 through the busbar 22. The connecting wire 70 passes through the first opening 41 and connects to the BMS module 30. Through the connecting wire 70, the temperature information of the battery pack 100 can be transmitted to the BMS module 30, so that the BMS module 30 can detect the temperature information of the battery pack 100, avoiding overheating of the battery pack 100.

In some embodiments, the isolation plate 40 includes a first inner wall 411 surrounding the first opening 41. The connecting wire 70 and the first inner wall 411 are hermetically connected. The sealing connection can prevent high-temperature gas and ejecta produced by thermal runaway from being transmitted to the BMS module 30 along the gap of the first opening 41, increasing the safety of the BMS module 30. Specifically, the connection method between the connecting wire 70 and the first inner wall 411 can be a sealing connection between the end of the branch wire harness near the connecting terminal 71 and the first inner wall 411, or it can be a sealing connection between the connecting terminal 71 and the first inner wall 411. The size and shape of the first opening 41 can be designed according to actual conditions to ensure that the connecting wire 70 can pass through the first opening 41. It can be understood that when the number of connecting wires 70 increases, multiple first openings 41 can be provided correspondingly.

In some embodiments, the connecting wire 70 and the first inner wall 411 can be connected through structures such as sealing adhesive, sealing ring, sealing tape, etc., such as using sealing adhesive applied between the connecting wire 70 and the first inner wall 411. It can be understood that those skilled in the art can take other ways to make the connecting wire 70 hermetically connected to the first inner wall 411.

In some embodiments, the isolation plate 40 includes a protruding part, the protruding part protrudes towards the accommodating space 101 and forms a groove, the first inner wall 411 serves as a wall of the groove, a sealing structure is filled in the groove. The end of the protruding part away from the BMS module 30 is provided with a first groove hole 412 opposite to the first opening 41, the first groove hole 412 is smaller than the first opening 41, to guide the connecting wire 70 to pass through towards the direction of the BMS module 30. The connecting wire 70 passes through the first groove hole 412 and then extends to the first opening 41, and connects to the connector 72. The connecting wire 70 can be hermetically connected to the first groove hole 412, to increase structural stability.

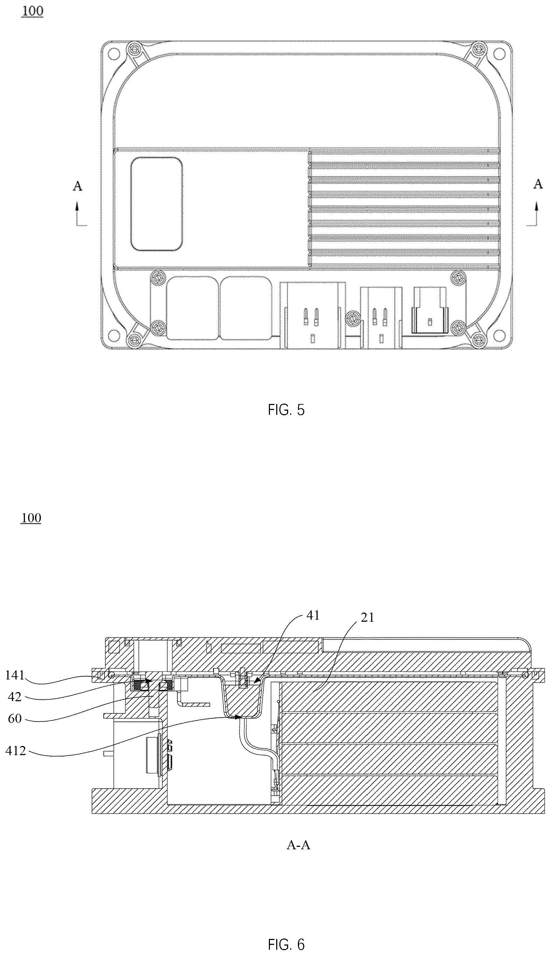

FIG. 4 illustrates a third exploded view of the battery pack 100. FIG. 5 illustrates a top view of the battery pack 100 with the BMS module 30 in place. FIG. 6 illustrates a cross-sectional view of the battery pack 100 along line A-A in FIG. 5. As shown in FIGS. 3-6, in some embodiments, the BMS module 30 includes a tab part 31 and a control board 32.

The control board 32 is installed on the side facing the battery module 20 and is used to collect information of the battery module 20, and upload the information to the upper computer, where the upper computer is a computer with comprehensive management control board and corresponding control software. The tab part 31 is connected to the side of the control board 32 facing the battery module 20, and the tab part 31 is provided with a through hole.

The battery module 20 includes a battery 21 and a busbar 22 connected to the battery 21. The busbar 22 is provided with a passage hole corresponding to the through hole. The busbar 22 facilitates current collection, distribution, and export, ensuring the safe and efficient operation of the battery system. The battery pack 100 further includes a fastener 60. The isolation plate 40 is provided with a second opening 42. The fastener 60 passes through this second opening 42, the through hole in the tab part 31, and the passage hole in the busbar 22, to fix the tab part 31 and the busbar 22. Through the connection of the tab part 31 and the busbar 22, the BMS module 30 can measure the voltage of the battery module 20, to monitor the battery status. Setting the second opening 42 on the isolation plate 40 can facilitate the connection of the tab part 31 and the busbar 22, ensuring the stability and reliability of the battery pack 100 operation without changing the original internal structure of the battery pack 100.

The battery 21 includes a plurality of cells. The busbar 22 includes a main body 221 and an extension part 222. The busbar 22 can be a copper busbar, an aluminum busbar, or the like. The main body 221 includes a plurality of busbar pieces. Both ends of each busbar piece are electrically connected to a first electrode of a first cell and a second electrode of a second cell, respectively. The first cell and the second cell are two ones of the plurality of cells that are adjacent in the direction of series connection. The first electrode and the second electrode have opposite polarities. A third cell, a fourth cell and so on may be similarly arranged as known in the art.

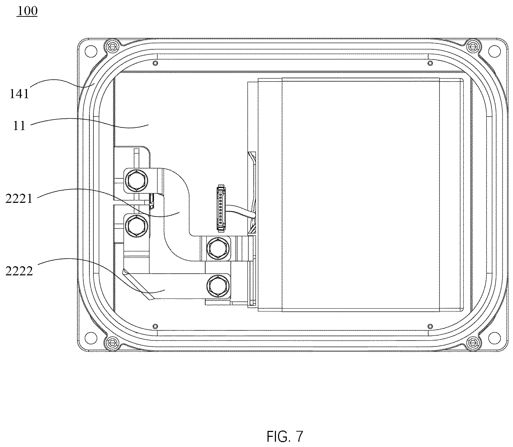

FIG. 7 is a top view of the battery pack 100 with the BMS module 30 removed. As shown in FIG. 7, a busbar piece connected to the first cell may be connected to a first extension section 2221 of the extension part 222, and another busbar piece connected to the last cell may be connected to a second extension section 2222 of the extension part 222. The first extension section 2221 and the second extension section 2222 have opposite polarities.

The tab part 31 is connected to the side of the control board 32 facing the battery 21. The tab part 31 includes a first tab 311 and a second tab 312. The first tab 311 and the first extension section 2221 have the same polarity, and the second tab 312 and the second extension section 2222 have the same polarity. For example, the first tab 311 is negative and connected to the first extension section 2221 which is also negative, and the second tab 312 is positive and connected to the second extension section 2222 which is also positive.

The battery pack 100 may further include a plurality of fasteners 60 that can be screws, bolts, studs, etc. The busbar 22 and tab part 31 connected by fasteners 60 are easy to install and disassemble, and the connection reliability and stability are higher. Specifically, there are at least two second openings 42, each fastener 60 passes through one second opening 42. The second opening 42 is disposed on one side of the isolation plate 40, and is spaced apart from the first opening 41. The size and shape of the second opening 42 can be designed according to actual conditions to ensure that the fastener 60 can pass through the second opening 42. Among them, the first tab 311 is provided with a first through hole 313, the first extension section 2221 is provided with a first passage hole, the first tab 311 is attached to the first extension section 2221, a fastener 60 passes through the first through hole 313 and the first passage hole, to fix the first tab 311 and the first extension section 2221; the second tab 312 is provided with a second through hole 314, the second extension section 2222 is provided with a second passage hole, the second tab 312 is attached to the second extension section 2222, a fastener 60 passes through the second through hole 314 and the second passage hole, to fix the second tab 312 and the second extension section 2222.

In some embodiments, the isolation plate 40 includes a second inner wall 421 surrounding the second opening 42, the fastener 60 and the second inner wall 421 are hermetically connected. The sealing connection can prevent high-temperature gas and ejecta produced by thermal runaway from being transmitted to the BMS module 30 along the gap of the second opening 42, increasing the safety of the BMS module 30. Specifically, after a fastener 60 fixes the first extension section 2221 and the first tab 311, it is hermetically connected to the second inner wall 421 through a sealing structure; after a fastener 60 fixes the second extension section 2222 and the second tab 312, it is hermetically connected to the second inner wall 421 through a sealing structure. The fastener 60 and the second inner wall 421 can be connected through structures such as sealing adhesive, sealing ring, sealing tape, etc., such as using sealing adhesive applied between the fastener 60 and the second inner wall 421. It can be understood that those skilled in the art can take other ways to make the fastener 60 hermetically connected to the second inner wall 421.

As shown in FIGS. 6-7, in some embodiments, the BMS module 30 includes a cover body 33. The cover body 33 includes a first connecting edge 331 facing the housing 10. The housing 10 includes a bottom wall 11 and a housing wall 12 surrounding the bottom wall 11. The housing wall 12 includes a second connecting edge 14 facing the cover body 33, and the second connecting edge 14 surrounds the isolation plate 40.

Specifically, the housing wall 12 includes an end surface facing the BMS module 30, and the second connecting edge 14 is connected to the periphery of this end surface. When the isolation plate 40 is disposed at the housing opening 13, the isolation plate 40 is in the same plane as the first connecting edge 331. However, when the isolation plate 40 is disposed in the accommodating space 101, the isolation plate 40 is disposed lower than the first connecting edge 331. The first connecting edge 331 and the second connecting edge 14 are matched with each other. When the cover body 33 is covered on the housing 10, the first connecting edge 331 and the second connecting edge 14 are hermetically connected. The first connecting edge 331 and the second connecting edge 14 can be fixedly connected around the periphery through fastening structures such as screws, bolts, or similar devices. Those skilled in the art can also use methods such as plug-in connection, snap-fit connection, etc. to connect the cover body 33 and the housing 10.

In some embodiments, the housing 10 further includes a gasket 141. The second connecting edge 14 is provided with a groove, the gasket 141 is disposed in the groove. The cover body 33 includes a protrusion, the protrusion is connected to the first connecting edge 331 and protrudes towards the housing 10. When the cover body 33 is covered on the housing 10, the protrusion is embedded into the gasket 141, to enhance the sealing effect between the cover body 33 and the housing 10.

Some embodiments of the present application have been described in detail above. The description of the above embodiments merely aims to help to understand the present application. Many modifications or equivalent substitutions with respect to the embodiments may occur to those of ordinary skill in the art based on the present application. Thus, these modifications or equivalent substitutions shall fall within the scope of the present application.

## Claims

1. A battery pack (100), **characterized by** comprising:
a housing (10), wherein an accommodating space (101) is formed in the housing (10);
a battery module (20) disposed within the accommodating space (101);
a battery management system (BMS) module (30) spaced apart from the battery module (20); and
an isolation plate (40) disposed between the battery module (20) and the BMS module (30) and hermetically connected to the housing (10) to isolate the battery module (20) from the BMS module (30).

2. The battery pack (100) of claim 1, **characterized in that** the housing (10) comprises:
a bottom wall (11); and
a housing wall (12) surrounding the bottom wall (11) to form the accommodating space (101),
wherein a housing opening (13) is provided at an end of the housing wall (12) away from the bottom wall (11);
the isolation plate (40) is disposed at the housing opening (13); and
a periphery of the isolation plate (40) is hermetically connected to the housing wall (12).

3. The battery pack (100) of claim 2, **characterized by** further comprising a sealing adhesive layer disposed at a joint between the isolation plate (40) and the housing wall (12).

4. The battery pack (100) of claim 2, **characterized by** further comprising a sealing ring (50) sleeved on the isolation plate (40) and abutting between the housing wall (12) and the isolation plate (40).

5. The battery pack (100) of claim 1, **characterized in that** the isolation plate (40) is disposed within the accommodating space (101) and divides the accommodating space (101) into a first chamber and a second chamber;
the BMS module (30) is disposed in the first chamber, and the battery module (20) is disposed in the second chamber; and
a periphery of the isolation plate (40) is hermetically connected to the housing (10).

6. The battery pack (100) of any one of claims 1-5, **characterized in that** further comprising a connecting wire (70),
wherein the isolation plate (40) is provided with a first opening (41); and
the connecting wire (70) passes through the first opening (41), and is provided with a first end connected to the battery module (20) and a second end connected to the BMS module (30).

7. The battery pack (100) of claim 6, **characterized in that** the isolation plate (40) comprises a first inner wall (411) surrounding the first opening (41), and the connecting wire (70) is hermetically connected to the first inner wall (411).

8. The battery pack (100) of claim 7, **characterized in that** the isolation plate (40) comprises a protruding part protruding towards the accommodating space (101) to form a groove, and the first inner wall (411) serves as a wall of the groove; and
a sealing structure is filled in the groove.

9. The battery pack (100) of claim 8, **characterized in that** an end of the protruding part away from the BMS module (30) is provided with a first groove hole (412) opposite to the first opening (41);
the connecting wire (70) passes through the first groove hole (412) and extends to the first opening (41); and
the connecting wire (70) is hermetically connected to the first groove hole (412).

10. The battery pack (100) of any one of claims 1-5, **characterized in that** the BMS module (30) comprises a tab part (31) and a control board (32);
the tab part (31) is connected to a side of the control board (32) facing the battery module (20), and the tab part (31) is provided with a through hole;
the battery module (20) comprises a battery (21) and a busbar (22) connected to the battery (21);
the busbar (22) is provided with a passage hole corresponding to the through hole;
the battery pack (100) further comprises a fastener (60);
the isolation plate (40) is provided with a second opening (42); and
the fastener (60) is disposed to pass through the second opening (42), the through hole and the passage hole to fix the tab part (31) and the busbar (22).

11. The battery pack (100) of claim 10, **characterized in that** the isolation plate (40) comprises a second inner wall (421) surrounding the second opening (42), and the fastener (60) is hermetically connected to the second inner wall (421).

12. The battery pack (100) of claim 1, **characterized in that** the BMS module (30) comprises a cover body (33) having a first connecting edge (331) facing the housing (10);
the housing (10) comprises a bottom wall (11) and a housing wall (12) surrounding the bottom wall (11);
the housing wall (12) is provided with a second connecting edge (14) facing the cover body (33);
the second connecting edge (14) surrounds the isolation plate (40); and
the first connecting edge (331) is hermetically connected to the second connecting edge (14).

13. The battery pack (100) of claim 12, **characterized in that** the second connecting edge (14) is provided with a groove;
the housing (10) further comprises a gasket (141) disposed in the groove;
the cover body (33) comprises a protrusion connected to the first connecting edge (331) and protruding towards the housing (10); and
the protrusion is embedded into the gasket (141).

14. The battery pack (100) of claim 12, **characterized in that** the housing wall (12) is provided with an explosion-proof valve for the battery module (20).

15. The battery pack (100) of claim 1, **characterized by** further comprising a sealing tape adhered to a periphery of the isolation plate (40).
